# FASCICULE DE BREVET EUROPEEN

(11) **EP 0 991 991 B1**
(45) Date de publication et mention de la délivrance du brevet: **06.11.2002**
(21) Numéro de dépôt: 98932250.8
(22) Date de dépôt: 22.06.1998
(51) Int. Cl.: G06F 3/023

(54) **CLAVIER POUR ORDINATEURS DE BUREAU ET PORTABLES**
TASTATUR FÜR TISCHRECHNER UND TRAGBARE RECHNER
KEYBOARD FOR DESKTOP AND PORTABLE COMPUTERS

(30) Priorité: 23.06.1997 FR 9707791
(43) Date de publication de la demande: 12.04.2000
(73) Titulaire: Klein, Jean-Michel, 75011 Paris (FR)
(72) Inventeur: Klein, Jean-Michel, 75011 Paris (FR)
(74) Mandataire: Berger, Helmut
(86) Numéro de dépôt international: FR9801303
(87) Numéro de publication internationale: WO98059289

(56) Documents cités:
- WO-A-88/00137
- US-A- 4 615 629
- US-A- 4 963 044
- US-A- 5 620 267
- "TYPING KEYBOARD OPTIMIZATION FOR HAND-HELD COMPUTERS" IBM TECHNICAL DISCLOSURE BULLETIN, vol. 37, no. 6B, 1 juin 1994, pages 227-229, XP000455991
- "INPUT DEVICE FOR OS/2" IBM TECHNICAL DISCLOSURE BULLETIN, vol. 33, no. 11, 1 avril 1991, page 255 XP000110386

## Description

L'invention concerne un clavier pour ordinateurs de bureau et portables, du type comportant une multitude de touches de caractères telles que des lettres, des chiffres, des signes de ponctuation et d'accents, de touches de déplacement et de commande de périphériques et comprenant notamment un jeu de touches de caractères alphanumériques de machine à écrire et de touches assorties pour l'exécution des opérations d'écriture et un jeu de touches de caractères numériques de calculatrice, assorties de touches d'exécution des opérations de calcul, l'ensemble des touches alphabétiques étant groupé dans une zone centrale compacte.

Sur les claviers connus de ce type, l'ensemble des touches caractérisant une machine à écrire et l'ensemble des touches caractéristiques d'une calculatrice sont agencés dans des zones séparées du panneau de clavier. Celui-ci comporte donc le clavier alphanumérique principal de machine à écrire, un pavé numérique, situé à une certaine distance de celui-ci, et une zone de touches fléchées assurant les fonctions de déplacement, intercalée entre le clavier alphanumérique principal et le pavé numérique. Pour que le maniement du clavier, notamment en mode d'écriture et en mode de calculatrice soit le plus aisé possible, malgré l'éloignement des touches des deux ensembles, il était estimé nécessaire de conserver pour le clavier alphanumérique principal et le pavé numérique toutes les touches assorties d'exécution des opérations, en créant ainsi des doublons. Ceci a également pour conséquence que le clavier comporte deux jeux de touches numériques, sur le clavier alphanumérique principal et dans le pavé numérique spécifique de calcul.

Cette configuration connue du clavier s'explique par le fait que lors de l'évolution des machines à écrire vers des systèmes informatiques de plus en plus complexes, susceptibles d'exécuter des fonctions plus nombreuses et sophistiquées, on a conservé l'aspect habituel du clavier et ajouté à chaque nouvelle étape des touches supplémentaires par exemple sous forme de blocs séparés.

Les claviers existants présentent donc l'inconvénient d'être très encombrants. Ce problème est particulièrement gênant dans le cas d'ordinateurs portables devant souvent être utilisés dans des conditions mettant à le dispositif de l'opérateur un espace très réduit. Pour éviter cet inconvénient il est connu pour des portables de supprimer le pavé numérique.

La présente invention a pour but de proposer un clavier pour ordinateurs de bureau et portables, qui pallie les inconvénients qui viennent d'être énoncés.

Un clavier selon l'invention est défini dans la revendication 1.

Pour atteindre ce but, le clavier selon l'invention est caractérisé en ce que l'ensemble des touches du clavier sont agencées sous forme d'un même bloc de rangées de touches juxtaposées, que toutes les touches numériques sont groupées dans une même zone compacte intégrées au bloc et que les touches d'exécution des opérations, telles que des touches de déplacement, sont groupées, selon leurs familles de fonction, dans des zones compactes, intégrées audit bloc.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :
- Les figures 1 à 3 illustrent trois modes de réalisation d'un clavier universel selon l'invention pour des configurations de touches alphabétiques, respectivement du type AZERTY, QWERTY et ABCDE ; et
- La figure 4 montre un quatrième mode de réalisation du clavier selon l'invention, démontrant une autre possibilité d'agencement des zones de touches numériques et de déplacement.
- La figure 5 montre un cinquième mode de réalisation du clavier selon l'invention, notamment utilisable pour des ordinateurs de poche.

Comme le montrent les figures, aux quatre modes de réalisation de l'invention, représentés à titre d'exemples, non limitatifs, est commun que les touches sont agencées sous forme d'un même bloc de forme rectangulaire et que tous les doublons de touche sont évités. Les différentes touches sont définies de la manière habituelle par des signes ou symboles connus les identifiant comme touches alphabétiques, numériques, de significations diverses, telles que des caractères nationaux par exemple d'accents, de déplacement symbolisées par des flèches, de fonctions spéficiques et de commandes de périphériques. Ces touches et les fonctions auxquelles elles sont destinées étant connues, il n'est pas nécessaire de les présenter de façon détaillée.

Comme le montre les figures, les différentes touches sont agencées sous forme de sept rangées horizontales de la même longueur, qui sont juxtaposées verticalement, c'est-à-dire perpendiculairement aux rangées.

Le clavier selon l'invention se compose d'une pluralité de zones de touches principales, à savoir une zone centrale compacte de touches uniquement alphabétiques, indiquées en 1, une zone compacte de touches numériques 2, intégrée au bloc de l'ensemble des touches et située ainsi près de la zone de touches alphabétiques, une zone compacte de touches fléchées de déplacement 3, une zone 4 occupant principalement les deux premières rangées et contenant les touches de fonction F1 à F12 et les touches de parenthèses, crochets, de signes divers tels que de caractères nationaux, notamment d'accents, une zone 5 occupant notamment les touches en haut à droite et la dernière colonne et concernant l'accès Internet, une zone 6 compacte de signes de ponctuation et d'opérations de calcul, située en dessous de la zone 1 des touches alphabétiques et les touches ESPACE et ENTREE connues en soi, mais ici juxtaposées en 7 dans la dernière rangée, la longueur de la touche ESPACE étant plus courte que d'habitude. Cette dispositif de la touche ENTREE présente l'avantage de permettre son actionnement aussi par le pouce.

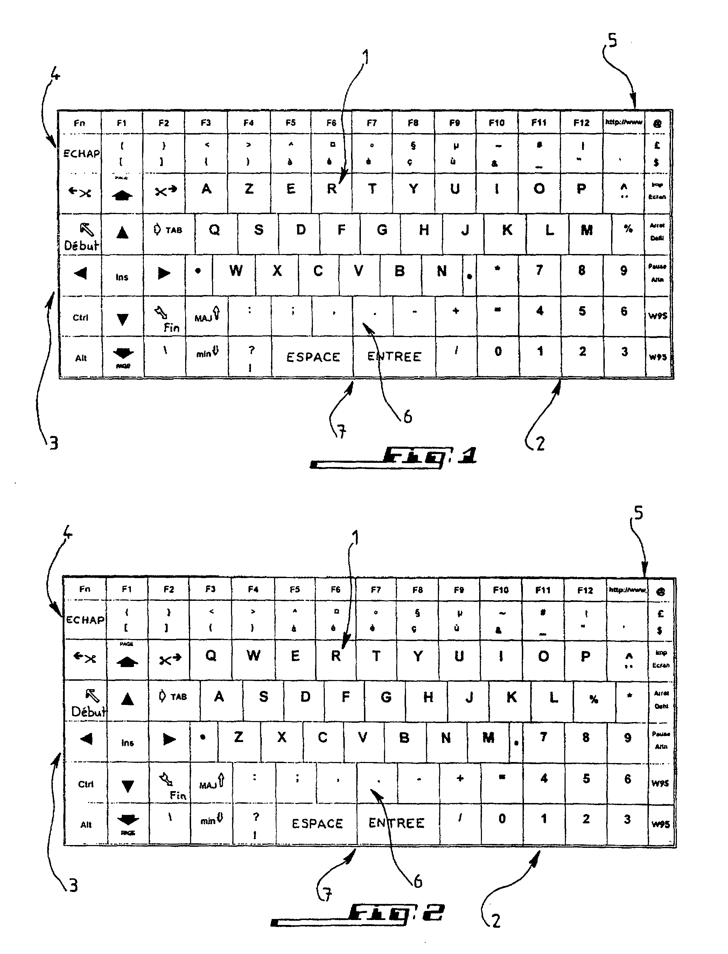

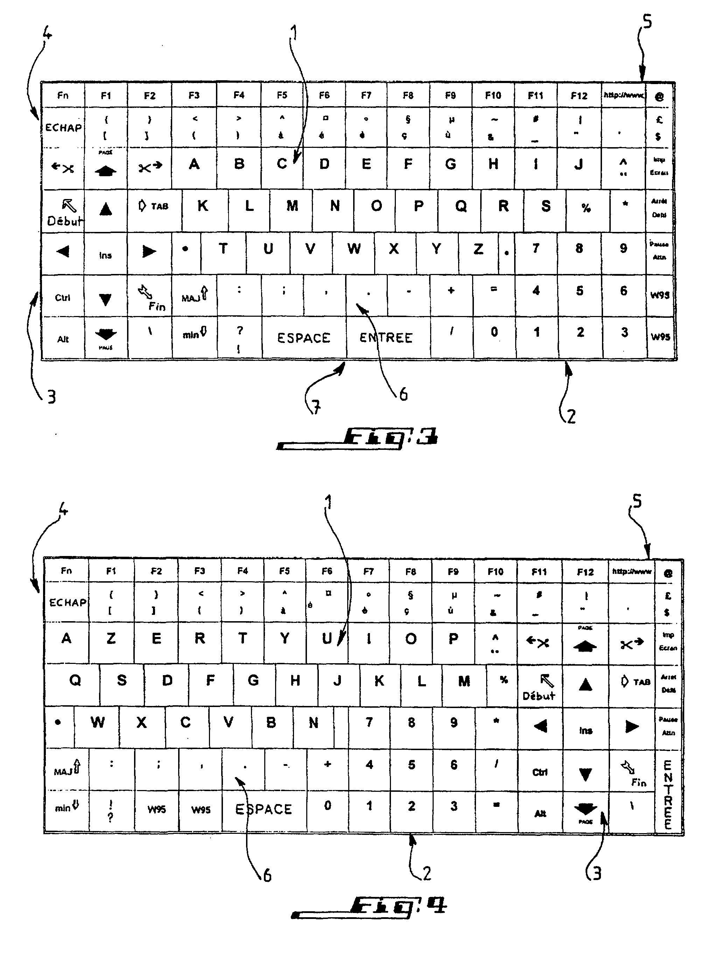

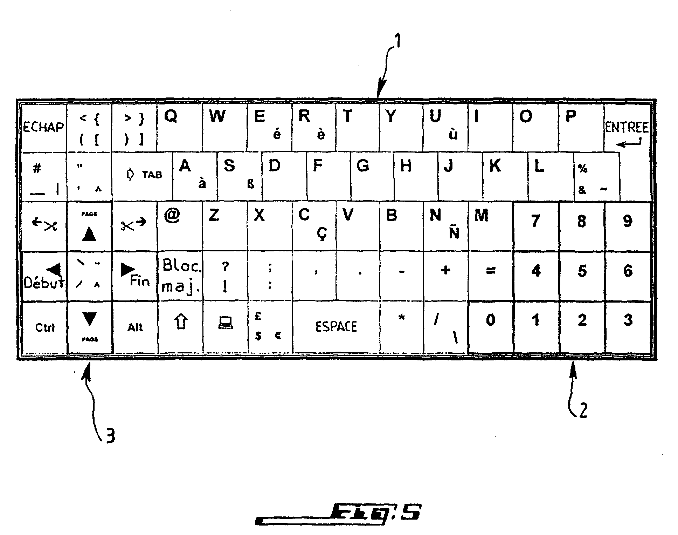

On constate que la zone compacte 3 des touches de déplacement présente une forme générale rectangulaire s'étendant, essentiellement, sur une portion de cinq rangées et trois colonnes. Dans les modes de réalisation représentés sur les figures 1 à 3, cette zone est située à gauche de la zone centrale de touches alphabétiques 1, tandis que, dans le mode de réalisation selon la figure 4, elle est disposée à droite de cette zone 1 décalée maintenant vers la gauche jusqu'au bord du clavier.

Dans cette zone 3 les différentes touches de déplacement, chacune pourvue d'un symbole en forme d'une flèche, sont diposées autour de la touche connue en soi Ins d'insertion. La zone comporte, autour de cette touche centrale Ins, au-dessus, en dessous, à droite et à gauche, les quatre touches à flèche en forme d'un triangle noir pour les déplacements dans les directions indiquées, et, situées diagonalement par rapport à la touche Ins, deux touches à flèche simple, oblique et non noircie, qui indique les fonctions de déplacement "FIN" et "DEBUT". En haut et en bas de la zone 3, dans la colonne médiane se trouvent les deux touches Pages haut et bas et à côté de la touche supérieure Page haut, on voit les deux touches d'effacement d'un caractère situé en avant et en arrière et symbolisées chacune par une paire de ciseaux et une petite flèche indicatrice de la direction de déplacement.

Concernant la zone de touches numériques 2, elle reproduit la forme du pavé numérique classique, avec les touches d'opération de calcul assorties et est située dans la partie inférieure du clavier, sensiblement en dessous de la zone de touches alphabétiques 1, dans les modes de réalisation selon les figures 1 à 3 à droite sur le clavier et, sur la figure 4, en position décalée vers le centre, au côté gauche de la zone de déplacement 3. Sur cette figure, la touche ENTREE est placée en bas à droite et les touches W95 dédiées au système d'exploitation sont disposées à gauche de la touche ESPACE dans la dernière rangée.

Il ressort de la description qui vient d'être faite et des figures que le regroupement selon l'invention de toutes les touches concernant un même mode de fonctionnement et les mêmes fonctions assorties sont disposés dans des zones compactes et voisines de façon que l'opérateur puisse les utiliser aisément. Ce regroupement n'est donc pas seulement avantageux sur le plan fonctionnel, mais aussi du point de vue ergonomique. Le regroupement a permis de réduire considérablement l'encombrement du clavier. Ainsi le clavier selon l'invention peut avoir une longueur inférieure à 30 cm au lieu de 45 cm sur les claviers standards existants, tout en gardant la taille normale des touches. De plus l'invention permet l'élimination de tous les doublons. On constate encore qu'à l'exception des touches de la deuxième rangée, sensiblement toutes les autres touches sont à fonction unique, ce qui facilite encore le maniement du clavier.

Le clavier selon l'invention comporte en plus des espaces tels qu'à droite et à gauche de la rangée inférieure de la zone de touches alphabétiques 1, qui pourraient être réservés à des voyants en forme de diodes électroluminescentes symbolisés par des points noirs et permettant en particulier d'avoir le voyant de majuscule en plein champ visuel.

Bien entendu, diverses modifications peuvent être apportées au clavier selon l'invention, à condition de respecter le principe du groupement des touches. Il est possible de prévoir en bas du clavier un dispositif de pointage et de disposer par exemple au moins les touches de la première rangée de part et d'autre de ce dispositif de pointage.

La figure 5 montre un clavier notamment pour ordinateurs de poche. On constate que le principe de la disposition des touches qui vient d'être décrit pour des ordinateurs de bureau et portables peut aussi être transposé aux claviers d'ordinateurs de poche, sans rangée de touches de fonctions et avec des touches de parenthèses, crochets et signes divers partagés, c'est-à-dire susceptibles d'accomplir plusieurs fonctions.

## Revendications

1. Clavier pour ordinateurs de bureau et portables, du type comportant des touches de caractères alphabétiques arrangées selon l'ordre standard AZERTY, QWERTY ou ABCDE, dans trois rangées parallèles et des touches numériques arrangées selon la configuration standard des pavés numériques de calcul, dans une zone principale de trois rangées et trois colonnes, des touches relatives aux fonctions de déplacement et des touches de parenthèses, crochets et de signes divers tels que de caractères nationaux notamment d'accents, **caractérisé en ce que** l'ensemble des touches du clavier est disposé dans un même bloc de touches juxtaposées de forme rectangulaire à axe longitudinal parallèle aux rangées des caractères alphabétiques, que le pavé (2) des touches numériques est intégré au dit bloc sensiblement en dessous des rangées de touches alphabétiques (1) et **en ce que** les touches de déplacement sont groupées dans une zone de touches (3) contiguës parallèlement aux rangées et perpendiculairement à celles-ci, cette zone étant située à côté et au moins en partie en dessous de la zone (1) des touches alphabétiques.

2. Clavier selon la revendication 1, **caractérisé en ce que** les touches de signes de ponctuation sont situées dans une zone compacte (6), en dessous de la zone (1) de touches alphabétiques.

3. Clavier selon l'une des revendications précédentes, **caractérisé en ce qu'**il ne comporte pas de touches de doublon.

4. Clavier selon l'une des revendications précédentes, **caractérisé en ce que** des voyants sont disposés centralement.

5. Clavier selon l'une des revendications précédentes, **caractérisé en ce qu'**il comporte, avantageusement en bas du clavier, un dispositif de pointage et qu'au moins les touches d'une rangée sont agencées de part et d'autre de ce dispositif.

6. Clavier selon l'une des revendications précédentes, **caractérisé en ce que** à l'exception des touches de parenthèses, crochets et des signes divers, les touches sont à fonction unique.

7. Clavier selon l'une des revendications précédentes, **caractérisé en ce que** la touche ESPACE est disposée dans la rangée inférieure et présente une longueur réduite telle qu'une longueur correspondant à celle de deux touches alphanumériques juxtaposées.

8. Clavier selon l'une des revendications précédentes, **caractérisé en ce que** la touche ENTREE est disposée dans la rangée inférieure et présente une longueur réduite telle qu'une longueur correspondant à celle de deux touches alphanumériques juxtaposées.

9. Clavier selon l'une des revendications 1 à 7, **caractérisé en ce que** la touche ENTREE est située dans une colonne extérieure avantageusement la colonne extérieure droite et présente une longueur correspondant avantageusement à la longueur de deux touches alphanumériques juxtaposées.

10. Clavier selon l'une des revendications précédentes, comprenant des touches de fonctions, **caractérisé en ce que** les touches de fonction sont disposées à la périphérie du bloc.

## Claims

1. A keyboard for desktop and portable computers, of a type containing alphabetic keys arranged in standard AZERTY, QWERTY or ABCDE order, in three parallel rows, and numeric keys disposed according to the standard configuration of standard numeric keypads, in a main zone of three rows and three columns, keys related to displacements, to functions such as parentheses, brackets, and to various signs such as national characters, in particular accents, **characterized in that** the whole of keys is disposed as a single block of juxtaposed keys of rectangular shape with a longitudinal axis parallel to the rows of alphabetic keys, **in that** the zone (2) of numeric keys is integrated to said block, substantially under the rows of alphabetic keys, and **in that** the displacement keys are grouped in a compact zone (3) of keys adjacent and parallel to
the rows and perpendicular to them, this zone being located next to and at least partially under zone (1) of alphabetic keys.

2. A keyboard according to the preceding claim, **characterized in that** punctuation keys are located in a compact zone (6) under zone 1 of alphabetic keys.

3. A keyboard according to one of the preceding claims, **characterized in that** it has no doubles.

4. A keyboard according to one of the preceding claims, **characterized in that** some lights are centrally located.

5. A keyboard according to one of the preceding claims, **characterized in that** it includes at its bottom a pointing device and that the keys of at least one row are disposed on either side of this device.

6. A keyboard according to one of the preceding claims, **characterized in that**, with the exception of keys of parentheses, brackets and various signs, the keys have a single function.

7. A keyboard according to one of the preceding claims, **characterized in that** the SPACE key is located in the last row and presents a reduced length, such as the length of two juxtaposed alphanumeric keys.

8. A keyboard according to one of the preceding claims, **characterized in that** the ENTER key is located in the bottom row and presents a reduced length, such as the length of two juxtaposed alphanumeric keys.

9. A keyboard according to one of the claims 1 to 7, **characterized in that** the ENTER key is located in an outer column, advantageously the last column to the right, and presents a length advantageously corresponding to that of two juxtaposed alphanumeric keys.

10. A keyboard according to one of the preceding claims, comprising function keys, **characterized in that** the function keys are located at the periphery of the block.

## Patentansprüche

1. Tastatur für Tischrechner und tragbare Rechner, von der Art, umfassend nach der Standardreihenfolge AZERTY, QWERTY oder ABCDE in drei parallelen Reihen angeordnete Tasten mit alphabetischen Zeichen und nach der Standardkonfiguration der digitalen Rechenblöcke angeordnete digitale Tasten in einem Hauptbereich von drei Reihen und drei Spalten, Tasten für die Positionierungsfunktionen und Klammer-, Häkchen und Tasten für verschiedene Zeichen, wie zum Beispiel nationale Zeichen, insbesondere Akzente, **dadurch gekennzeichnet, dass** der Tastenaufbau der Tastatur in ein und demselben Block nebeneinander liegender Tasten in rechteckiger Form mit zu den Reihen der alphabetischen Zeichen parallelen Längsachse angeordnet ist, dass der Block (2) digitaler Tasten in besagten Block deutlich unterhalb der alphabetischen Tasten (3) integriert ist und dass die Positionierungstasten in einem Bereich angrenzender Tasten (1) parallel zu den Reihen und senkrecht zu diesen gruppiert sind, wobei dieser Bereich sich neben und wenigstens zum Teil unterhalb des Bereichs (1) der alphabetischen Tasten befindet.

2. Tastatur gemäß Anspruch 1, **dadurch gekennzeichnet, dass** die Tasten der Zeichensetzungszeichen sich in einem kompakten Bereich (6) unterhalb des Bereichs (1) der alphabetischen Tasten befinden.

3. Tastatur gemäß einem der vorgenannten Ansprüche, **dadurch gekennzeichnet, dass** sie keine Doppeltasten umfasst.

4. Tastatur gemäß einem der vorgenannten Ansprüche, **dadurch gekennzeichnet, dass** die Anzeigen zentral angeordnet sind.

5. Tastatur gemäß einem der vorgenannten Ansprüche, **dadurch gekennzeichnet, dass** sie vorteilhaft unten an der Tastatur eine Kontrollvorrichtung umfasst und dass wenigstens die Tasten einer Reihe auf jeder Seite dieser Vorrichtung angeordnet sind.

6. Tastatur gemäß einem der vorgenannten Ansprüche, **dadurch gekennzeichnet, dass**, mit Ausnahme der Klammer-, Häkchen- und der Tasten für verschiedene Zeichen, die Tasten eine einzige Funktion haben.

7. Tastatur gemäß einem der vorgenannten Ansprüche, **dadurch gekennzeichnet, dass** die LEERTASTE in der unteren Reihe angeordnet ist und eine verkürzte Länge aufweist wie die Länge, die einer den zwei nebeneinander liegenden alphadigitalen Tasten entspricht.

8. Tastatur gemäß einem der vorgenannten Ansprüche, **dadurch gekennzeichnet, dass** die Taste ENTER in einer unteren Reihe angeordnet ist und eine verkürzte Länge aufweist wie die Länge, die einer den zwei nebeneinander liegenden alphadigitalen Tasten entspricht.

9. Tastatur gemäß Anspruch 1 bis 7, **dadurch gekennzeichnet, dass** die Taste ENTER sich in einer äußeren, vorteilhaft der rechten äußeren Spalte befindet und eine vorteilhaft der Länge von zwei nebeneinander liegenden alphadigitalen Tasten entsprechende Länge aufweist.

10. Tastatur gemäß einem der vorgenannten Ansprüche mit Funktionstasten, **dadurch gekennzeichnet, dass** die Funktionstasten an der Peripherie des Blocks angeordnet sind.
